# EUROPEAN PATENT APPLICATION

(11) **EP 1 994 836 A1**
(43) Date of publication of application: **26.11.2008**
(21) Application number: 07010251.2
(22) Date of filing: 23.05.2007
(51) Int. Cl.: A23L 1/025, A23L 1/217, A23N 15/00

(54) **Process for lowering the content of sugar in potatoes and device for continuous tretment of potatoes for chips manufacturing**

(71) Applicant: Kraft Foods R & D, Inc., Northfield, IL 60093 (US)
(72) Inventor: Andersson, Per Anders, Torslanda 42354 Gothenburg (SE); Frederikson, Per Mattias, 44160 Alingsas (SE); Turek, Evan J., 60025 Glenview, IL (US)
(74) Representative: HOFFMANN EITLE

(57) **Abstract**

The present invention relates to a method of lowering and controlling the content of reducing sugars in a potato raw material without affecting the cell wall or starch structure, said method comprising the steps of suspending the potato raw material in an aqueous carrier and applying moderate electric field pulses having a field strength in the range of from 200 to 10,000 V/cm, or a moderate electric alternate current field having a field strength in the range of from 100 to 400 V/cm to the suspended potato raw material. The method can be applied in a process for producing potato chips, prior to a frying step. Furthermore, the invention relates to a device for carrying out the method of the invention.

## Description

### Field of the Invention

The present invention is directed to a process and device for lowering the content of sugars, in particular reducing sugars, in potatoes without affecting the cell wall structure. The thus treated potatoes are advantageously used in the manufacture of potato chips. In particular, the process of the invention allows using potato varieties which have not been suitable for processing into potato chips up to now.

### Technical Background

There are several thousands of commercial potato varieties available in the world today, but only a few can be used for industrial frying of potato chips. The chipping varieties oftentimes have considerably lower field yield than varieties for table, starch and French fries and are thereby often premium priced. The main limiting factor is the content of reducing sugar such as glucose and fructose. In the frying process, the Maillard reaction causes a degradation of such reducing sugars and, therefore, results in products having inferior organoleptic properties, such as a dark colour and a pronounced burnt taste, in particular if the frying process is carried out long enough to reduce the water content of the product to acceptable levels. Moreover, too high a content of reducing sugars may result in the generation of unacceptable levels of acrylamide in the frying process. In recent years, the content of acrylamide in potato chips has been associated with health concerns, and reduced levels of acrylamide are desired.

Potatoes of the so-called "chipping" varieties usually have a content of reducing sugars of less than 0.15 % by weight. Such material can be used in the frying process applied in the manufacture of potato chips. In contrast, potatoes of the so-called "non-chipping" varieties possess a content of reducing sugars of more than 0.15 % by weight, for example 0.15 to 0.50 % by weight, and even up to 2 % by weight. As a result, if used in the manufacture of potato chips, they are prone to the Maillard reaction with the ensuing effects on the organoleptic properties.

Another source for an increased level of reducing sugars is found in the storage and processing of potatoes. Thus, temperature and moisture conditions as well as handling stress experienced by the potatoes after harvesting may result in an accumulation of reducing sugars which are not initially present in the fresh potato crop. This may increase the content of reducing sugars in chipping potatoes to unacceptable levels, i.e. above 0.15 % by weight, and further increase the natural level of reducing sugars observed in the non-chipping potato varieties.

In view of the above, it would be advantageous to be able to use non-chipping potato varieties or reduced quality chipping potato varieties for the manufacture of potato chips, without the detrimental effects caused by the Maillard reaction as a result of a high level of reducing sugars. Advantages would possibly arise with regard to a reduction of costs of raw materials, an improvement of quality of the end product, a reduction in acrylamide content upon frying and a reduction of the complexity of potato sourcing/planning.

The only technique used today to adjust the content of reducing sugars in potatoes and, in particular, potato slices prior to frying is traditional blanching. However, blanching and other thermal treatments have a negative impact on texture and taste of the resulting potato chip product and on the line yield of the process. This negative impact is a result of the degradation of the cell wall structure (beta-elimination depolymerisation of the pectins) and the gelatinisation of starch granules, which will have a negative impact on line yield and waste water treatment efficiency. In addition, an enzymatic discoloration can be observed after the blanching treatment. Blanching conditions, i.e. preheating to more than 45 °C or, more conventionally, 60 to 95 °C for 1 to 4 minutes, are also likely to degrade some of the flavour precursors, mainly amino acids, which will result in a lack of fried potato flavour in the finished product, even though there is an excess of amino acids versus reducing sugars in the raw potato tissue.

As a result, a new means has been desired to allow the use of non-chipping potato varieties or reduced quality chipping potato varieties in the manufacture of potato chips. The new technology facilitates the processing of non-chipping varieties that have higher reducing sugar levels than regular chipping potatoes. Of course, it is understood that such non-chipping or reduced quality chipping varieties need to fulfil other basic requirements for industrial potato chips frying, e.g. dry matter content (preferably 18 to 25%), shape (round or oval), easy to peel, low glycoalcaloid content, no off-taste, not susceptible to pressure bruises and greening.

Considering the above, there are several working points that may be useful in solving the problems discussed above. For example, modifications in the processing of the harvested potatoes or in the subsequent storage might be envisaged. Similarly, one might consider changes to the conventional blanching process that maintain the sugar adjustment properties of this operation, yet forego the drawbacks associated with the thermal treatment.

In other technical fields, high electric field pulses (HEFP) have been considered a promising new technology for non-thermal microbial inactivation over the last 30 years, but have never been implemented in a commercial full-scale production. More recently, a number of papers have been published regarding moderate electric field pulses (MEFP) as a tool for improving dehydration characteristics of products, i.e. vegetables and fruit, and for improving the yield of extraction process in, e.g., carrots, sugar beets, olives, etc. In particular, the MEFP treatment has been used to improve the conventional extraction processes. In other words, MEFP treatment has been combined with grinding, pressing, milling, heating or enzymatic treatment to maximise the extraction yield.

I. Sensoy et al. (Extraction using moderate electric fields, J. Food Sci. 69:7-13, 2004) describe the extraction of black tea leaves and mint leaves assisted by application of moderate electric fields (MEF). The MEF treatment was applied to a continuous cross-flow extraction system, at electric fields in the range of up to 125 V/cm, a frequency of 50 to 5000 Hz (pulse repetition time 0.2 to 20 ms) and a flow rate of 1 liter per minute. The authors conclude that the leaching of solutes is enhanced apparently because of membrane breakdown that could be caused by field-induced tension.

M. Bazhal et al. (Pulsed electric field treatment of apple tissue during compression for juice extraction, J. Food Eng. 50:129-139, 2001) describe the effect of a pulsed electric field at 100 to 520 V/cm, pulse duration of 100 µs and pulse repetition time of 10 ms on the extraction of juice from fine-cut apple raw material. Simultaneous application of pressure and PEF treatment is said to reveal a passive form of PEF-induced cell plasmolysis.

M. Bazhal et al. (Electrical treatment of apple cossettes (chips) for intensifying juice pressing, J. Sci. Food Agric 80:1668-1674, 2000) describe the effects of moderate electric field pulses (MEFP) on the juice yield obtained by pressing apple cossettes. In the pressing stage, the authors applied 1000 pulses of 200 to 1000 V with a duration of 100 µs and a period of 10 ms. In the introductory section of this publication, the authors refer to MEFP as using electric fields of 0.3 to 1.5 kV/cm (300 to 1500 V/cm), as opposed to low electric field pulses (LEFP) of 0.1 to 0.3 kV/cm (100 to 300 V/cm).

M. N. Eshtiaghi et al. (High electric field pulse pretreatment: potential for sugar beet processing, J. Food Eng. 52:265-272, 2002) describe the extraction of sucrose from sugar beet by a pressing procedure assisted by high electric field pulses (HEFP) at 1200 to 2500 V/cm and a pulse number of up to 200.

US 2003/0165608 A1 concerns a process for treating vegetables and fruit in order to reduce their resistance to cutting. The treatment involves the application of a high electric field directly to the vegetables and fruit, including potato tubers for French fries manufacturing, for examples applying 30 to 75 V/cm at a frequency of 50 or 60 Hz over a period of between 1 and 10 seconds.

US 3,997,678 is directed to a process of preparing deep-fried potato products such as chips or French fries, wherein the conventional blanching step comprising washing and preheating before the actual cooking in oil is replaced by a modified blanching step. In this step, the sliced potato products are submerged in water and subjected to the passage of an electric current of 50 to 60 cycles per second supplied to the water bath by means of electrodes immersed therein. During this step, the potato products are heated to a suitable high temperature such as the boiling point. The voltage applied is between 0.2 and 20 V/mm (2 to 200 V/cm).

The present invention aims at the provision of a method for rendering high reducing sugar potatoes available as a raw material for the manufacture of high quality potato chips, without the drawbacks of conventional blanching processes. The process will enhance mass transfer of intracellular substances (molecules) of the same size or smaller than reducing sugars, while maintaining larger substances in the cell, e.g. starch granules and proteins. The objective is to create pores in the cell membranes with electrical fields (electroporation) without damaging the cell wall structure or gelatinising the starch granules. The pores should be big enough to let out reducing sugars, but small enough to keep larger molecules within the cell.

### Summary of the Invention

In one aspect, the present invention is directed to a method of lowering the content of reducing sugars in a potato raw material, said method comprising the steps of suspending the potato raw material in an aqueous carrier and applying moderate electric field pulses (MEFP) or a moderate electric alternate current field (MEACF) to the suspended potato raw material.

In another aspect, the present invention is directed to a process for producing potato chips from a potato raw material wherein the potato raw material, prior to a frying step and a leaching step, is subjected to the method of lowering the content of reducing sugars thereof. The leaching step is a conventional processing step in which the potato raw material is kept in water at less than 45°C for a period of from 15 seconds to 10 minutes, depending on the initial reducing sugar content.

Finally, the present invention provides a device for continuous treatment of potatoes for chips manufacturing.

### Drawing

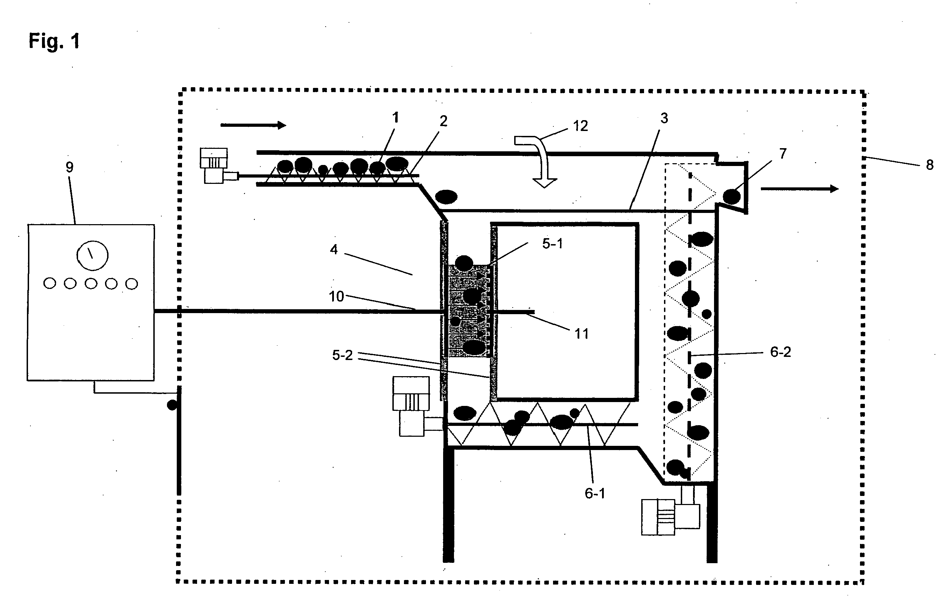

Figure 1 shows an embodiment of the device of the invention for continuous treatment of potatoes. The reference signs depict the following features:
1 - incoming potato raw material
2 - feeding screw for conveying potato raw material towards electrode gap
3 - water level
4 - electrode gap
5-1 - perforated non-conductive material
5-2 - insulation material (e.g., polyacetal, breakdown at no less than 60 to 70 kV/cm)
6-1, 6-2 - feeding screws for conveying potato raw material away from electrode gap
7 - treated potato material
8 - insulated fence
9 - MEFP generator
10 - high voltage electrode
11 - ground electrode
12 - fresh water (tap water) supply

### Detailed Description of the Invention

### Raw material

In the present invention, the potato raw material may be unpeeled or peeled potatoes. The potato raw material may also be cut potatoes, preferably sliced potatoes. In the case of cut (sliced) potatoes, the potatoes are preferably peeled in advance.

The potato raw material may be derived from a non-chipping potato variety, i.e. a variety which is not usually used in the manufacture of potato chips, especially owing to too high a content of reducing sugars. In this case, the level of reducing sugars in the potato raw material may be 0.10 % by weight or more, or even 0.50 % by weight or more, or even 0.75 % by weight or more.

The potato raw material to be subjected to the method of the present invention may also be derived from a chipping potato variety, in particular if it has accumulated high levels of reducing sugars due to improper handling or growing conditions. For example, such potato raw material may have a content of reducing sugars of more than 0.10 % by weight or more, or even 0.50 % by weight or more, or even 0.75 % by weight or more.

The potato raw material may even be derived from a chipping potato having a low reducing sugar content of less than 0.10 % by weight. The use of such raw material may allow keeping particularly low levels of acrylamide after the frying step, for example levels of less than 400 ppb, or even less than 200 ppb.

### Electric field treatment step

The electric field treatment step in accordance with the present invention may be conducted by means of applying either moderate electric field pulses (MEFP) or a moderate electric alternate current field (MEACF) to the potato raw material suspended in an aqueous carrier, usually water. The conductivity of the aqueous carrier is preferably in the range of 0.01 to 3.0 mS/cm, preferably 0.2 to 0.5 mS/cm and more preferably 0.3 mS/cm.

### a) MEFP treatment

In general, the electric field applied in the MEFP treatment has a field strength in the range of 200 to 10,000 V/cm. Further parameters to be adjusted in the MEFP treatment, such as duration of the field pulse, pulse frequency, number of field pulses and total energy applied, may be adjusted depending on the potato raw material and the particular field strength chosen.

In one embodiment, the field strength may be in the range of 200 to 10,000 V/cm, or 500 to 2000 V/cm, or 1000 to 1700 V/cm, in particular about 1500 V/cm. Here, the field pulses are preferably square field pulses (mono- or bipolar).

The duration of the field pulses in this embodiment is preferably 2 to 100 µs per pulse, more preferably 8 to 12 µs per pulse and even more preferably about 10 µs. The pulse frequency is preferably 1 to 1000 Hz (pulses per second), or 100 to 500 Hz, or 200 to 400 Hz, in particular about 300 Hz. The number of pulses may be more than 1, preferably 20 or more, more preferably 50 to 100, in particular about 75.

The total energy applied by the field pulses in this embodiment of the MEFP treatment is in the range of usually 0.01 to 30 kJ/kg, preferably 3 to 12 kJ/kg and more preferably about 6 kJ/kg.

In another embodiment of the MEFP treatment, the field strength applied may be in the range of 200 to 1500 V/cm, or 400 to 600 V/cm, in particular about 600 V/cm. Here, the electric field pulses are preferably positive or negative pulses with an exponential decay.

The duration of the field pulses in this embodiment is preferably 100 to 500 µs, more preferably 300 to 400 µs per pulse. The pulse frequency is preferably 1 to 100 Hz, more preferably 10 to 50 Hz, in particular about 35 Hz. The number of pulses may be in the range of 1 to 200, preferably 10 to 50, more preferably 10 to 40, in particular about 40.

The total energy applied by the field pulses in this embodiment of the MEFP treatment is usually in the range of 0.01 to 20 kJ/kg, preferably 1 to 10 kJ/kg, more preferably about 2 to 4 kJ/kg and most preferably 3 kJ/kg.

### (b) MEACF treatment

In the MEACF treatment, an electric field is applied using an alternate current (AC). The field strength in this case is generally from 100 to 400 V/cm, preferably 200 to 300 V/cm and more preferably 240 to 280 V/cm, in particular about 280 V/cm. The field strength is defined as the integrated area under the sinusoidal wave, i.e. peak-U/√2.

The treatment time in this alternative of the electric field treatment step is generally from 50 to 2000 ms, preferably 100 to 200 ms, in particular about 200 ms.

### General

The electric field treatment step may be carried out batch-wise or continuously. Batch-wise means that a treatment chamber is charged with potato raw material, the electric field treatment is carried out, and the treated potato raw material is released. In the continuous treatment, a stream of potato raw material, suspended in the aqueous carrier, passes through two electrodes in the treatment section of the processing apparatus, without stopping.

The temperature of the potato raw material in the electric field treatment step is generally not higher than 50 °C, preferably not higher than 45 °C, more preferably not higher than 35 °C. In particular, in one preferred embodiment, the processing of the potatoes from their raw state to the frying process does not involve blanching, or heating to above 45 °C, which is commonly used in the processing of potato chips.

By means of the process of the invention and, in particular if no blanching step is used, i.e. if no heating of the potato raw material above 45 °C is employed, it is possible to keep the cell wall structure of the potato raw material intact, so that only reducing sugars and smaller molecules are released into the aqueous carrier in which the potato raw material is suspended, whereas larger substances such as starch granules and proteins stay inside the cells. This effect is observed even if whole potatoes (peeled or unpeeled) are subjected to the process in accordance with the present invention. In this case, the reducing sugars are released from the potatoes into the surrounding liquid carrier once they are cut or sliced, prior to frying. Without wishing to be bound by theory, it is assumed that the electric field treatment step results in the release of the reducing sugars into the extracellular space, so that they are set free completely once the potatoes are cut or sliced.

### Device for full-scale treatment

New technologies within the electronic industry have reduced the costs for pulse generator components. The costs of pulse generators have been reduced by 50 to 70 % over the last three years. Significant reduction in costs is also anticipated in the coming years owing to developments within the relevant fields of technology. Still, the main cost driver for full-scale implementations is the cost of the pulse generator, which increases exponentially with the peak and mean power of the generator. As a result, the treatment chamber needs to be designed to minimise the power demand of the pulse generator, i.e. the conductivity of the process water should be low, the potato/water ratio should be high, product flow rate (m/s) should be low, the electrode gap and the electrode area should be minimised. In general, whole and sliced potatoes require a potato/water ratio of at least 1/10 to be pumpable in practice, i.e. 90% of the energy input will be used to heat the water if the conductivity of the process water is in parity with the conductivity of the potato raw material. Moreover, whole and sliced potatoes need a flow rate of 3 to 4 m/s in pipes in order to avoid blockages. Hence, if 100 pulses are needed and the pulse frequency is 500 Hz, the required treatment time will be 0.2 s, i.e. the electrode length need to be 0.6 to 0.8 m, which will give a huge electrode area and thereby enormous power requirements. As a result, two electrodes in a pipe are in general not suitable for industrial potato processing owing to the required speed of flow and potato/water ratio.

In the treatment chamber in accordance with the invention, the potatoes are not pumped through the electrodes. Instead, they fall by gravity through the electrodes, as depicted in Figure 1. As a result, the potato/water ratio can be increased from 1/10 to, e.g., 1/3. In the invention, by using two synchronised feeding screws, the potato/water ratio can be controlled by using two synchronised feeding screws 2 and 6-1, 6-2. The length of the electrode gap in the device of the invention is preferably from 10 to 40 cm, more preferably 10 to 20 cm, even more preferably from 12 to 16 cm.

### Example

The unit can MEFP treat 3,600 to 4,500 kg potatoes per hour. The potato/water ratio through the electrodes is 1/1 to 1/3 and the speed through the electrodes is only 0.5 to 1.0 m/s, preferably 0.6 to 0.8 m/s. A treatment time of 0.2 s (100 pulses/500 Hz) will then require electrodes having a length of 12 to 16 cm, which is considerably less than the value calculated for prior art embodiments. The chamber is also designed to maintain low process water conductivity by a continuous supply of fresh water that is conductivity controlled.

The treatment chamber of the invention will only require 10 to 20 kW from the MEFP generator for processing 3,500 kg potatoes/h (1,000 kg chips/h), with 100 pulses at an electric field strength of 1,500 V/cm and with a pulse duration of 10 µs and a water conductivity of 0.4 mS/cm. To pump whole potatoes through a simple pipe with two electrodes would require a 15 times higher mean power than the treatment chamber of the invention, i.e. 150 to 300 kW, which would not be feasible from an MEFP generator perspective today.

## Claims

1. A method of lowering the content of reducing sugars in a potato raw material, said method comprising the steps of
- suspending the potato raw material in an aqueous carrier and
- applying moderate electric field pulses having a field strength in the range of from 200 to 10,000 V/cm or a moderate electric alternate current field having a field strength in the range of from 100 to 400 V/cm to the suspended potato raw material.

2. The method according to claim 1, wherein moderate electric field pulses are applied and the moderate electric field pulses are square field pulses.

3. The method according to claim 2, wherein the duration of the field pulses is from 2 to 100 µs per pulse.

4. The method according to claim 2 or 3, wherein the pulse frequency is from 1 to 1000 Hz.

5. The method according to any one of claims 2 to 4, wherein total energy applied in the field pulse treatment is from 0.01 to 30 kJ/kg.

6. The method according to claim 1, wherein moderate electric field pulses are applied and the moderate electric field pulses are exponential decay field pulses.

7. The method according to claim 6, wherein the duration of the field pulses is from 100 to 500 µs per pulse.

8. The method according to claim 6 or 7, wherein the pulse frequency is from 1 to 100 Hz.

9. The method according to claim 1, wherein a moderate electric alternate current field is applied and the treatment time is from 50 to 2000 ms.

10. The method according to any one of claims 1 to 9, wherein the temperature of the potato raw material in the electric field treatment step is not higher than 45 °C.

11. The method according to any one of claims 1 to 10, wherein the potato raw material prior to the electric field treatment has a level of reducing sugars of more than 0.10 % by weight.

12. A process for producing potato chips from a potato raw material wherein the potato raw material, prior to a frying step, is subjected to the method of lowering the content of reducing sugars thereof as defined in any one of claims 1 to 11.

13. The process according to claim 12, wherein the potato raw material, prior to frying, is not subjected to a blanching step.

14. A device for lowering the content of reducing sugars in a potato raw material as defined in any one of claims 1 to 11, **characterised in that** the potato raw material falls by means of gravity through an electrode gap generating the electric field.

15. The device according to claim 14, wherein the length of the electrode gap is 10 to 40 cm.
